# EUROPÄISCHE PATENTSCHRIFT

(11) **EP 0 503 649 B1**
(45) Veröffentlichungstag und Bekanntmachung des Hinweises auf die Patenterteilung: **21.01.1998**
(21) Anmeldenummer: 92104321.2
(22) Anmeldetag: 12.03.1992
(51) Int. Cl.: C02F 3/12, C02F 1/44

(54) **Verfahren und Vorrichtung zur biologischen Reinigung von mit biologisch schwer oder nicht abbaubaren Inhaltsstoffen organisch belasteten Abwässern**
Process and apparatus for biological purification of waste waters polluted with non biodegradable or hardly biodegradable substances
Procédé et dispositif pour la purification biologique d'eaux usées polluées par des substances non ou difficilement dégradables

(30) Priorität: 13.03.1991 EP 91103860
(43) Veröffentlichungstag der Anmeldung: 16.09.1992
(73) Patentinhaber: WEHRLE-WERK AG, D-79301 Emmendingen (DE)
(72) Erfinder: Wagner, Friedrich Dr.-Ing., W-7803 Heuweiler1 (DE); Wienands,Herbert Dipl.-Ing., W-7835 Teningen 2 (DE); Rautenbach,Robert Prof. Dr.-Ing., NL-6291 BP-Vaals (NL); Mellis, RainerDipl.-Ing., W-5100 Aaachen (DE)
(74) Vertreter: Kraus, Jürgen Helmut, Dipl.-Phys. Dr.

(56) Entgegenhaltungen:
- EP-A- 0 413 356
- DE-A- 3 709 174
- DE-A- 3 811 591
- DE-A- 3 815 271
- WORLD PATENTS INDEX Section Ch, Week 8040, Derwent Publications Ltd., London, GB; Class C, AN 80-70612C

## Beschreibung

Die Erfindung betrifft ein Verfahren zur Reinigung von mit biologisch schwer oder nicht abbaubaren Inhaltsstoffen organisch belastetem Abwasser, bei dem das Abwasser in einer dessen biologischer Reinigung dienenden biologischen Behandlungsstufe behandelt und danach in einer Nanofiltereinrichtung die biologisch schwer oder nicht abbaubaren Inhaltsstoffe als Retentat abgetrennt werden, und bei dem eine physikalische und/oder chemische Behandlung vorgesehen ist, sowie eine Vorrichtung zur Durchführung dieses Verfahrens.

Es ist bekannt, mit organischen Inhaltsstoffen belastete Abwässer einer biologischen Reinigung Zu unterziehen, wobei die organischen Abwasserinhaltsstoffe mikrobiell umgesetzt werden. Bei der mikrobiellen Umsetzung werden die Abwasserinhaltsstoffe unter Bildung von biologischem Schlamm in unschädliche Stoffwechselprodukte und körpereigene Substanz umgewandelt. Der biologische Schlamm kann entweder durch eine Trennung aufgrund unterschiedlicher Dichte in Absetz- oder Flotationsanlagen abgetrennt werden oder unter Erzielung einer praktisch vollständigen Fest-flüssig-Trennung mit sehr hohem Reinheitsgrad durch Filtration in einem Membran- oder Ultrafilter.

Ein Verfahren der letztgenannten Art, bei dem die mikrobielle Umsetzung unter Überdruck erfolgt und die Abtrennung des behandelten Abwassers vom biologischen Schlamm durch Filtration in einem Membran- oder Ultrafilter vorgenommen wird, ist aus der DE 37 09 174 C2 bekannt, auf die hier hinsichtlich der Einzelheiten mikrobieller Umsetzung unter Überdruck und der Abtrennung des behandelten Abwassers vom biologischen Schlamm durch Membran- oder Ultrafiltration ausdrücklich Bezug genommen wird.

Das aus der DE 37 09 174 C2 bekannte Verfahren ist überaus erfolgreich bei der Reinigung von mit biologisch abbaubaren organischen Inhaltsstoffen belasteten Abwässern. Bei diesem Verfahren, bei dem die Umsetzung unter Überdruck erfolgt, lassen sich durch die vollständige Fest-flüssig-Trennung, die weitgehend unabhängig von den physikalischen Eigenschaften der Mikroorganismen stattfindet, erhöhte Biomassekonzentrationen erzielen, die im Vergleich zu früheren Verfahren eine Leistungssteigerung um das Mehrfache erlauben. Die vollständige Fest-flüssig-Trennung ermöglicht die Einhaltung extrem hoher Reinigungsgrade, die bis zur Rückhaltung sämtlicher Bakterien geht. Die Druckverhältnisse bei der Umsetzung und bei der Filtration lassen sich weitgehend einheitlich einstellen, so daß die aktive Biomasse keinen zu starken Differenzdrücken ausgesetzt wird, die zu ihrer Schädigung führen könnten.

Im Abwasser gelöste biologisch schwer oder nicht abbaubare organische Inhaltsstoffe sowie organische und anorganische Inhaltsstoffe mit gegenüber der Membrantrenngrenze kleinerer Partikelgröße sind noch in dem vom biologischen Schlamm abgetrennten behandelten Abwasser enthalten, wodurch die das behandelte Abwasser aufnehmenden natürlichen Gewässer belastet werden oder eine weitere industrielle Verwendbarkeit des behandelten Abwassers eingeschränkt ist.

Aus DE 38 15 271 A1 sind verschiedene Verfahrensabläufe bekannt, bei denen das mit den biologisch schwer oder nicht abbaubaren Inhaltsstoffen organisch belastete Abwasser sowohl eine biologische Abwasserreinigungsanlage als auch weitere Stufen durchläuft, in denen eine Adsorptionsbehandlung, eine Nanofiltration oder eine Oxidationsbehandlung durchgeführt wird. Insbesondere befindet sich darunter auch ein Verfahrensablauf der eingangs genannten Art, bei dem das mit den biologisch schwer oder nicht abbaubaren Inhaltsstoffen organisch belastete Abwasser zuerst einer biologischen Abwasserreinigung unterzogen und anschließend eine Nanofiltration ausgeführt wird. In allen diesen Fällen bleibt jedoch das Retentat der Nanofiltereinrichtung unbehandelt, weil die physikalischen, chemischen oder biologischen Behandlungsstufen entweder in den Zulauf oder in den Permeatablauf der Nanofiltereinrichtung geschaltet sind.

Bei einem anderen bekannten Verfahren (DE 38 11 591 A1) wird das Abwasser Zwei hintereinandergeschalteten Reaktionsräumen zugeführt, in deren erstem eine biologische aerobe Behandlung erfolgt und in deren Zweitem das solchermaßen vorbehandelte Abwasser einer biologisch aeroben Behandlung im Belebtschlammverfahren unterzogen wird. In einer nachgeschalteten Klärsektion wird das aufbereitete Abwasser von Feststoffen getrennt und anschließend einer Desinfektion durch chemische Behandlung und/oder Bestrahlung unterworfen. Nach dieser Desinfektionsbehandlung kann das Abwasser einer reversen Osmose unterzogen werden, wobei das Retentat der reversen Osmose zur erneuten Aufbereitung in die der biologischen Behandlung dienenden Reaktionsräume zurückgeführt wird. Dadurch wird das Retentat sofort wieder verdünnt und durchläuft erneut den Reinigungskreislauf, so daß hinsichtlich eines Abbaus der biologisch schwer oder nicht abbaubaren Inhaltsstoffe kein guter Wirkungsgrad erwartet werden kann.

Ein Ziel der Erfindung ist es daher, ein Verfahren zur Reinigung von mit biologisch schwer oder nicht abbaubaren Inhaltsstoffen organisch belasteten Abwässern anzugeben, bei dem auch die biologisch schwer oder nicht abbaubaren Inhaltsstoffe einer biologischen Reinigung zugänglich gemacht und in unschädliche Produkte umgesetzt werden.

Ein weiteres Ziel der vorliegenden Erfindung ist es, ein Verfahren zur Reinigung von mit biologisch schwer oder nicht abbaubaren Inhaltsstoffen organisch belasteten Abwässern zu schaffen, bei dem die biologisch schwer oder nicht abbaubaren Inhaltsstoffe durch chemische und/oder physikalische Behandlung aufbereitet werden, so daß die Inhaltsstoffe mikrobiell umsetzbar sind und in biologisch unschädliche Stoffwechselprodukte und körpereigene Substanz umgewandelt werden können.

Ein weiteres Ziel der Erfindung ist es, eine Vorrichtung zur Durchführung eines derartigen Verfahrens anzugeben.

Zur Erreichung dieser Ziele ist ein Verfahren der eingangs genannten Art erfindungsgemäß dadurch gekennzeichnet, daß das Retentat durch Rückführung im Kreislauf der Nanofiltereinrichtung zu einem Konzentrat aufkonzentriert, das Konzentrat der physikalischen und/oder chemischen Behandlung unterzogen und das behandelte Konzentrat mindestens teilweise zu der biologischen Behandlungsstufe zurückgeführt wird.

Bei der physikalischen und/oder chemischen Behandlung werden die biologisch schwer oder nicht abbaubaren organischen Stoffe so weit destruiert, bis die Destruktionsprodukte einem biologischen Abbau unmittelbar zugänglich sind und/oder gemeinsam mit anorganischen Stoffen über Adsorption bzw. Fällungs-/Flockungsreaktionen entnommen und das so behandelte Konzentrat einer biologischen Behandlung zugeführt oder ausgetragen werden kann.

Es ist ein besonderer Vorteil der Erfindung, daß ihre Anwendung zur Abtrennung und Aufkonzentrierung biologisch schwer oder nicht abbaubarer Inhaltsstoffe sowie zur Rückführung und Behandlung des Konzentrats prinzipiell unabhängig von der Art einer vorangegangenen biologischen Behandlung ist. Vorhandene oder neue biologische Behandlungsstufen können somit vorteilhaft mit dieser Erfindung kombiniert und ergänzt werden.

Durch die bei dem erfindungsgemäßen Verfahren vorgesehene Aufkonzentrierung der biologisch schwer oder nicht abbaubaren Inhaltsstoffe mit anschließender physikalischer und/oder chemischer Behandlung werden die Inhaltsstoffe so verändert, daß sie entweder einer biologischen Reinigung in Form einer mikrobiellen Umsetzung zugänglich gemacht und in biologisch unschädliche Stoffwechselprodukte und körpereigene Substanz umgewandelt werden oder in aufkonzentrierter Form ausgeschleust werden können.

Durch die Aufkonzentrierung durch Filtration in der Nanofiltereinrichtung wird ein nahezu vollständiger Rückhalt organischer, nach biologischer Vorbehandlung im wesentlichen aller biologisch schwer oder nicht abbaubaren Inhaltsstoffe erzielt, so daß mit dem behandelten Abwasser lediglich niedermolekular gelöste Inhaltsstoffe, vor allem Salze ausgetragen werden, wobei Rückhalt und Austrag durch die Auswahl geeigneter Membranen variiert werden können. Der Rückhalt anorganischer Inhaltsstoffe wird begrenzt durch die stoffspezifische Wirksamkeit der physikalisch/chemischen Verfahren, die diese Stoffe durch Adsorptions- und Fällungs-/Flockungsreaktionen aus dem Konzentrat entnehmen.

Im gereinigten Abwasser sind nach biologischer Klärung und Feststoffabtrennung überwiegend und bei sehr guter Reinigung fast ausschließlich Stoffe enthalten, die auch bei ausreichend langer Kontaktzeit mit der Biomasse biologisch nicht oder nur sehr schwer abgebaut werden können. Dies ist umso bedeutsamer, als für viele dieser Reststoffe die Möglichkeit eines biologischen Abbaus oder einer anderen umweltunschädlichen Elimination im Gewässer gering ist. Vorteilhafterweise ermöglicht die vorliegende Erfindung die Entfernung auch dieser Stoffe aus dem Abwasser als bedeutsame Maßnahme der Gewässerreinhaltung, was insbesondere durch die Verwendung der Nanofiltration begünstigt wird.

In den bekannten Durchlaufkläranlagen ablaufende konzentrationsabhängige biologische, physikalische und chemische Reaktionen erfordern lange Reaktionszeiten oder einen hohen Überschuß an Chemikalien, wenn die im Reaktionsraum eingestellten niedrigen Restkonzentrationen an organischen oder anorganischen Abwasserinhaltsstoffen gleichzeitig sowohl das geforderte Reinigungsziel sicherstellen sollen, als auch wegen der verbleibenden niedrigen Konzentrationsdifferenzen als treibende Kraft für die biologischen, physikalischen und chemischen Reaktionen für die langen Reaktionszeiten verantwortlich sind. Wegen dieser Kopplung führen niedrigere Restkonzentrationen zu großen Bauvolumina und zu hohen spezifischen Kosten für Energie bzw. Chemikalien, weswegen Verfahren mit dieser Kopplung an wirtschaftliche Grenzen stoßen.

Vorteilhafterweise trennt das erfindungsgemäße Verfahren diese Kopplung von Reinigungsziel und Reaktionskinetik, indem es das ausgezeichnete Rückhaltevermögen der Nanofiltration für organische Stoffe dazu benutzt, in der Form des Permeats ein sehr weitgehend gereinigtes Wasser zu erzeugen, dessen Qualität weitgehend unabhängig von Vorbehandlungsstufen bzw. der Konzentratbehandlung ist. Gleichzeitig vorteilhaft ist damit verknüpft, daß die im Retentat zurückgehaltenen Stoffe in konzentrierter Form anfallen, wobei die Konzentration der rückgehaltenen Stoffe durch mehrfache Rückführung bis zur gewünschten und zweckmäßigen Höhe gesteigert werden kann. Es ist von besonderem Vorteil, daß die aufkonzentrierten Inhaltsstoffe - unabhängig von den niedrigen Konzentrationen im Permeat - in den weiteren chemisch/physikalischen und/oder biologischen Behandlungsstufen wegen der hohen Konzentration und den damit verknüpften höheren Reaktionsgeschwindigkeiten besonders effizient umgewandelt und/oder biologisch abgebaut werden können.

Eine besonders hohe Reinigungswirkung wird erreicht, wenn die Aufkonzentrierung in mehreren hintereinandergeschalteten Nanofiltereinrichtungen ausgeführt wird.

Es ist besonders vorteilhaft, die Aufkonzentrierung der schwer oder nicht abbaubaren Stoffe wie auch anorganischer Stoffe kontinuierlich in einem ein- oder mehrstufigen Prozeß bis zum Erreichen einer vorgegebenen erwünschten und beliebig einstellbaren Konzentration durchzuführen und das bei der Filtration anfallende Permeat beim Erreichen eines vorgegebenen Rückhaltungszieles der schwer oder nicht abbaubaren Stoffe als gereinigtes Abwasser abzuleiten bzw. im Falle eines noch nicht ausreichenden Rückhaltungsgrades einer zweiten oder weiteren Behandlungsstufe mit weitergehender Trennschärfe zuzuführen, bis das Reinigungsziel erreicht ist und das Permeat als gereinigtes Abwasser abgeleitet werden kann.

Als besonders wirkungsvoll hat es sich erwiesen, das Konzentrat mit UV-Strahlung und/oder einem chemischen Oxidationsmittel zu behandeln. Durch die Behandlung mit UV-Strahlung und einem chemischen Oxidationsmittel wie Ozon oder H₂O₂ wird besonders reaktiver atomarer Sauerstoff dazu benutzt, z.B. Halogenkohlenwasserstoffe in Halogenid und umweltverträgliche Stoffe umzuwandeln. Ebenso werden langkettige und zyklische Kohlenwasserstoffe aufgebrochen und in biologisch abbaubare Stoffe umgewandelt. Es ist ein besonderer Vorteil der Destruktion biologisch nicht abbaubarer organischer Inhaltsstoffe mittels dieser Verfahren, daß dabei keine Reststoffe anfallen. Es ist ferner ein besonderer Vorteil des erfindungsgemäßen Verfahrens, daß die Destruktion mittels dieser Verfahren bei den vorher gezielt eingestellten hohen Konzentrationen besonders effizient ablaufen kann und mit einem Minimalaufwand nur so weit getrieben werden braucht, daß sich in dem aus biologischer Behandlung, Nanofiltration und chemisch/physikalischer Behandlung gebildeten Kreislauf keine störend hohen Stoffkonzentrationen aufbauen.

Alternativ oder zusätzlich kann das Konzentrat insbesondere mit einem Adsorptionsmittel oder mit einem Flockungs- und/oder Fällungsmittel behandelt werden.

Das Verfahren kann vorteilhafterweise so gestaltet werden, daß das Konzentrat durch Adsorption, Flockung und/oder Fällung der biologisch nicht abbaubaren Inhaltsstoffe behandelt und der entstehende Adsorptions-, Flockungs- und/oder Fällungsschlamm, an den die biologisch nicht abbaubaren Inhaltsstoffe gebunden sind, nach der chemisch/physikalischen Behandlung entfernt wird. Auf diese Weise ist es möglich, im zu reinigenden Abwasser gelöste oder dispergierte persistente Stoffe, wie z.B. Schwermetalle, aufzukonzentrieren und als Konzentrat für weitere chemische oder physikalische Verfahren wie Adsorption an Aktivkohle, Bentonit oder andere chemische Prozesse mittels Flockungs- und Fällungsreaktionen in eine abscheidbare Form zu überführen und dem zu reinigenden Abwasser zu entziehen.

Zum Regenerieren der für die Aufkonzentrierung durch Filtration vorgesehenen Nanofiltereinrichtung werden vorzugsweise Spülintervalle vorgesehen.

Die physikalische und/oder chemische Behandlung des Konzentrats kann diskontinuierlich oder kontinuierlich erfolgen. Von besonderem Vorteil ist es dabei, die Aufkonzentrierung und die physikalische/chemische Behandlung eines Konzentratteilstromes kontinuierlich vorzunehmen, was insbesondere bei Aufkonzentrierung in mehreren hintereinandergeschalteten Filtereinrichtungen von Vorteil ist.

Gemäß einer besonders vorteilhaften Weiterbildung des Verfahrens wird das behandelte Konzentrat einer biologischen Abwasserreinigungsanlage zugeführt, bei der eine mikrobielle Umsetzung unter Überdruck ausgeführt und das behandelte Abwasser durch Membran- oder Ultrafiltration vom biologischen Schlamm getrennt wird. Dabei ist insbesondere die Anwendung des in der DE 37 09 174 C2 beschriebenen Verfahrens von Vorteil, wonach die mikrobielle Umsetzung unter Überdruck ausgeführt und die Abtrennung des behandelten Abwassers vom biologischen Schlamm durch Filtration in einem Ultrafilter vorgenommen wird.

Die Verwendung einer derartigen Abwasserreinigungsanlage, bei der eine mikrobielle Umsetzung unter Überdruck ausgeführt und das behandelte Abwasser durch Membran- und/oder Ultrafiltration vom biologischen Schlamm getrennt wird, wie sie in der DE 37 09 174 C2 beschrieben ist, ist insbesondere von Vorteil zur biologischen Reinigung des Abwassers vor der Abtrennung und Aufkonzentrierung der biologisch schwer oder nicht abbaubaren Inhaltsstoffe.

Mittels des in der DE 37 09 174 C2 beschriebenen Verfahrens ist eine praktisch vollständige Fest-flüssig-Trennung des biologischen Schlamms vom Abwasser nach Durchführung einer biologischen Reinigung möglich, sei es vor der Aufkonzentrierung oder sei es zur weiteren biologischen Aufbereitung des bereits physikalisch oder chemisch behandelten Konzentrats, wobei die Trennung weitgehend unabhängig von den physikalischen Eigenschaften der auftretenden Mikroorganismen ist.

Ein weiterer wichtiger Gesichtspunkt des erfindungsgemäßen Verfahrens besteht darin, daß durch die Verwendung der Nanofiltereinrichtung die Verweilzeiten von Wasser, biologisch leicht abbaubaren Substanzen, biologisch schwer abbaubaren Substanzen und biologisch nicht abbaubaren Substanzen im Reinigungsprozeß, insbesondere in einem aus biologischer Reinigung, Nanofiltration, physikalisch/chemischer Behandlung und/oder die physikalisch/chemische Behandlung umgehendem Bypass gebildeten Wasserkreislauf, durch den unterschiedlichen Rückhalt dieser Substanzen in der Nanofiltereinrichtung voneinander entkoppelt werden. Damit lassen sich die Verweilzeiten der jeweiligen Substanzen an den zu ihrem Abbau bis zu den gewünschten Minimalkonzentrationen erforderlichen Zeitbedarf individuell anpassen.

Durch den unterschiedlichen Rückhalt der biologisch leicht und schwer abbaubaren Substanzen in der Nanofiltereinrichtung werden auch die Konzentrationserhöhungen der biologisch leicht und schwer abbaubaren Substanzen im Reinigungsprozeß, insbesondere in einem aus biologischer Reinigung, Nanofiltration, physikalisch/chemischer Behandlung und/oder die physikalisch/chemische Behandlung umgehendem Bypass gebildeten Wasserkreislauf, voneinander entkoppelt, so daß die Konzentration der biologisch schwer abbaubaren Substanzen so weit erhöht werden kann, bis letztere einem biologischen Abbau zugänglich sind.

Eine Vorrichtung zur Reinigung von mit biologisch schwer oder nicht abbaubaren Inhaltsstoffen organisch belastetem Abwasser mit einer dessen biologischer Reinigung dienenden biologischen Behandlungsstufe, der eingangsseitig das Abwasser zugeführt wird, einer Nanofiltereinrichtung, der eingangsseitig das in der biologischen Behandlungsstufe behandelte Abwasser zugeführt wird und in der ausgangsseitig einerseits die biologisch schwer oder nicht abbaubaren Inhaltsstoffe als Retentat und andererseits das gereinigte Abwasser als Permeat anfallen, und mit einer Einrichtung zur physikalischen und/oder chemischen Behandlung ist erfindungsgemäß dadurch gekennzeichnet, daß die zur physikalischen und/oder chemischen Behandlung dienende Einrichtung mit ihrer Ausgangsseite an die biologische Behandlungsstufe und mit ihrer Eingangsseite an einen zur Aufkonzentrierung des Retentats dienenden Filtrationsvorlagebehälter angeschlossen ist, der zwischen die Eingangsseite und die das Retentat liefernde Ausgangsseite der Nanofiltereinrichtung im Kreislauf geschaltet ist.

Vorteilhafterweise ist der erfindungsgemäßen Vorrichtung eine biologische Abwasserreinigungsanlage vorgeschaltet, wie sie in der DE 37 09 174 C2 beschrieben ist, die einen der mikrobiellen Umsetzung der biologisch abbaubaren Inhaltsstoffe des Abwassers dienenden, druckbeaufschlagten Bioreaktor, dem eingangsseitig das sowohl die biologisch abbaubaren als auch die biologisch schwer oder nicht abbaubaren Inhaltsstoffe enthaltende Abwasser zugeführt wird und eine an den Bioreaktor angeschlossene, den im Bioreaktor entstehenden biologischen Schlamm zurückhaltende Membranfiltrations- oder Ultrafiltrationseinrichtung, die eingangsseitig an den Bioreaktor angeschlossen ist und von der ausgangsseitig das vom biologischen Schlamm gereinigte Abwasser abgeleitet und dem der Aufkonzentrierung der biologisch schwer oder nicht abbaubaren Inhaltsstoffe des Abwassers dienenden Filtrationsvorlagebehälter zugeführt wird, enthält.

Die Überwachung der Beschaffenheit des Konzentrats erfolgt vorteilhafterweise kontinuierlich durch Leitfähigkeitsbestimmung, Trübungsmessung oder eine Analysatorvorrichtung.

Gemäß einer besonders vorteilhaften Weiterbildung der Erfindung ist eine Einrichtung zur naßchemischen Oxidation, wie eine Kombination einer UV-Belichtungseinrichtung und einer ein Oxidationsmittel wie Ozon oder H₂O₂ abgebenden Einrichtung zur Destruktion der biologisch schwer oder nicht abbaubaren Inhaltsstoffe nach Erreichen einer vorgegebenen Konzentration derselben vorgesehen.

Zur Entfernung von persistenten Inhaltsstoffen, wie Schwermetallen wird gemäß einer anderen Weiterbildung der erfindungsgemäßen Vorrichtung ein Reaktionsbehälter vorgesehen, in dem diese Inhaltsstoffe nach Erreichen einer vorgegebenen Konzentration der biologisch schwer oder nicht abbaubaren Inhaltsstoffe adsorptiv z.B. mit Aktivkohle, Bentonit oder mit einem Flockungs- und/oder Fällungsmittel einer weiteren Aufkonzentrierung unterzogen und aus der chemisch/physikalischen Behandlungsstufe entfernt werden. Die naßchemische Oxidation erfolgt vorteilhafterweise kontinuierlich unter Behandlung eines Teilstromes des Konzentrats.

Schließlich können mehrere Filtrationsstufen zur Aufkonzentrierung der biologisch schwer oder nicht abbaubaren Inhaltsstoffe vorgesehen sein.

Im folgenden wird die Erfindung anhand eines Ausführungsbeispiels beschrieben, wobei sich aus der Beschreibung weitere Merkmale, Einzelheiten und Vorteile der Erfindung ergeben, die Erfindung jedoch keinesfalls auf die in der Beschreibung angegebenen Einzelheiten beschränkt ist.

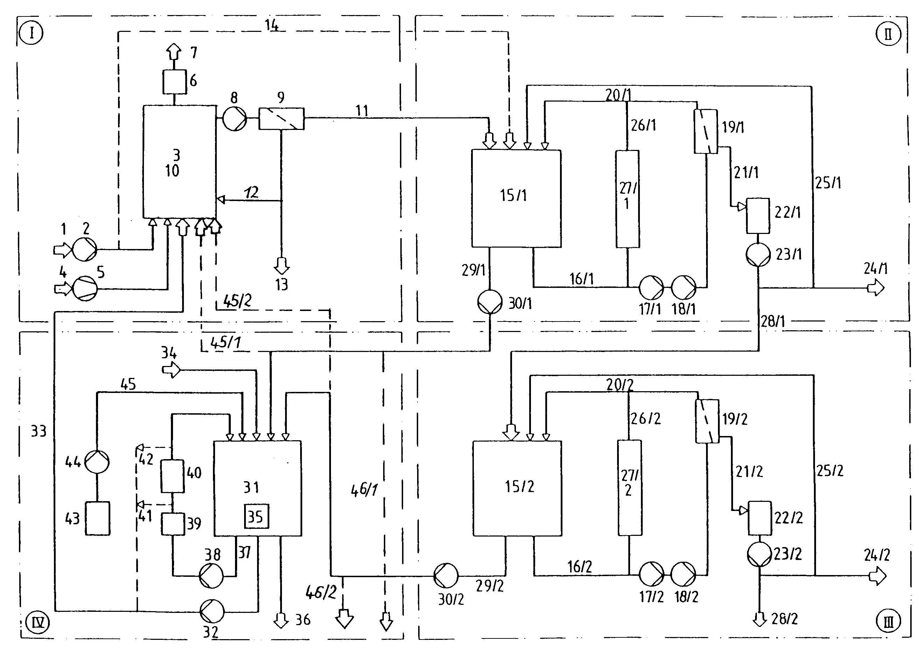

### KURZBESCHREIBUNG DER ABBILDUNG

Die Figur zeigt eine schematische Darstellung einer Vorrichtung zur Durchführung des erfindungsgemäßen Verfahrens, wobei in dem mit I kenntlich gemachten Teil der Figur eine Stufe zur biologischen Behandlung des zu reinigenden Abwassers vor der Aufkonzentration, in den mit II und III kenntlich gemachten Teilen der Figur Stufen zur Abtrennung und Aufkonzentration der biologisch schwer oder nicht abbaubaren Inhaltsstoffe und in dem mit IV kenntlich gemachten Teil der Figur eine Stufe zur physikalischen und chemischen Behandlung des Konzentrats gezeigt sind.

### BESTER WEG ZUR AUSFÜHRUNG DER ERFINDUNG

Wie aus der einzigen Figur der Zeichnung hervorgeht, wird in der für die biologische Behandlung der im zu reinigenden Abwasser enthaltenen biologisch leicht abbaubaren Inhaltsstoffe vorgesehenen Behandlungsstufe das zusätzlich mit biologisch schwer oder nicht abbaubaren Inhaltsstoffen organisch belastete Abwasser 1 mittels einer Zulaufpumpe 2 einem Bioreaktor 3 zugeleitet. Dem Bioreaktor, in dem Abwasserinhaltsstoffe biologisch abgebaut werden, wird bei aerober Behandlung Luft 4, die mittels eines Kompressors 5 komprimiert wird, zugeführt. Bei anaerober Behandlung wird der Systemdruck durch die Faulgasproduktion bewirkt. Ein am Bioreaktor angeschlossenes Druckhalteventil 6 dient der Ableitung des bei der aeroben Behandlung im Bioreaktor 3 verbrauchten bzw. im Falle anaerober Behandlung gebildeten Gases 7.

An dem Bioreaktor ist über eine Filterpumpe 8 eine Membran- oder Ultrafiltrationseinrichtung 9 angeschlossen, die mit biologischem Schlamm 10 aus dem Bioreaktor 3 beschickt wird, welcher bei der mikrobiellen Umsetzung der biologisch leicht abbaubaren Inhaltsstoffe gebildet wird. Die Membran- oder Ultrafiltrationseinrichtung 9 enthält eine semipermeable Filtermembran, die für Wasser und im Wasser gelöste Stoffe durchlässig ist, jedoch alle im Wasser schwebenden oder aufgeschwemmten festen Stoffe wie insbesondere die bei der mikrobiellen Umsetzung gebildeten Schlammpartikel und die im Bioreaktor vorhandenen Mikroorganismen selbst zurückhält. Die Membran der Filtrationseinrichtung 9 hat beispielsweise eine solche Porengröße, daß alle Teilchen zurückgehalten werden, die größer sind als 0,2 µm. Vorzugsweise ist die Membran so beschaffen, daß alle Teilchen mit einer Größe von mehr als 0,1 um zurückgehalten werden. Von besonderem Vorteil schließlich ist es, wenn die Membran so beschaffen ist, daß alle Teilchen mit einer Größe von mehr als 0,02 µm zurückgehalten werden.

Somit erfolgt in der Membranfiltrationseinrichtung 9 eine Abtrennung des Schlamms 10 vom biologisch gereinigten Abwasser 11. Das in den Bioreaktor zurückgeführte Schlammkonzentrat 12 steht dort wieder für den Bau- und Betriebsstoffwechsel der Mikroorganismen zur Verfügung. Der infolge des Baustoffwechsels der Mikroorganismen gebildete Überschußschlamm 13 wird der biologischen Behandlungsstufe I entnommen.

In einer nachfolgenden Nanofiltrationsstufe, die in der Zeichnung mit II kenntlich gemacht ist, wird das in der biologischen Behandlungsstufe I vorbehandelte Abwasser 11 oder das völlig unbehandelte, direkt von der Zulaufpumpe 2 gelieferte, mit biologisch schwer oder nicht abbaubaren Inhaltsstoffen organisch belastete Abwasser 14 einer weiteren Behandlung zugeführt.

Das biologisch behandelte 11 bzw. unbehandelte 14 Abwasser wird zunächst in eine Filtrationsvorlage 15/1 geleitet, in der eine Aufkonzentrierung dadurch erfolgt, daß das Abwasser 16/1 über eine Vordruckpumpe 17/1 und eine Filtrationspumpe 18/1 einer Membran-/Nanofiltrationseinrichtung 19/1 zugeführt wird. Die Membran-/Nanofiltrationseinrichtung 19/1 enthält eine semipermeable Membran, die so beschaffen ist, daß sie nur für Teilchen durchlässig ist, die wesentlich kleiner sind als die von der Ultrafiltrationseinrichtung 9 der biologischen Behandlungsstufe I zurückgehaltenen, oder in anderen Worten eine gegenüber der Ultrafiltrationseinrichtung 9 gesteigerte Trennschärfe hat. Die Membran-/Nanofiltrationseinrichtung 19/1 ist beispielsweise so beschaffen, daß im Abwasser enthaltenes NaCl zu 30 bis 70% zurückgehalten wird.

Auf diese Weise werden in der Membran-/Nanofiltrationseinrichtung 19/1 biologisch schwer abbaubare oder nicht abbaubare Inhaltsstoffe im Retentatstrom 20/1 zurückgehalten und aufkonzentriert, wonach das gereinigte Permeat 21/1 über eine Permeatvorlage 22/1 gesammelt wird. Entsprechend den Anforderungen wird der Permeatstrom mittels einer Permeatpumpe 23/1 und Ventilregelungen unterschiedlich geschaltet.

Entspricht das Permeat den Reinigungsanforderungen, so kann es aus der Anlage als gereinigtes Abwasser 24/1 abgeleitet werden. Da die Permeatleistung so ausgelegt ist, daß mehr Permeat 21/1 gebildet als der Anlage als Zulauf 11 bzw. 14 zugeführt wird, muß aus betrieblichen Gründen der Permeatüberschuß 25/1 in die Filtrationsvorlage 15/1 zurückgeführt werden. Ist in der Filtrationsvorlage 15/1 das Aufkonzentrierungsziel erreicht, welches beispielsweise kontinuierlich über Leitfähigkeits-, Trübungsmessung oder mittels einer Autoanalysationseinrichtung kontrolliert werden kann, so wird das Konzentrat entweder diskontinuierlich bzw. chargenweise oder ein Teilstrom kontinuierlich als Konzentrat 29/1 mittels einer Konzentratpumpe 30/1 der chemischen und/oder physikalischen Behandlungsstufe IV zugeführt.

Fällt die Filterleistung der Nanofiltration 19/1 ab, so kann mittels eines Spülkreislaufs 26/1, der von einer Spülvorlage 27/1 aus mit Wasser oder Permeat, das mit Reinigungsmitteln versetzt ist, gespeist ist, die Filtereinrichtung durch entsprechende Ventilsteuerung wieder freigespült werden.

Entspricht das Permeat 24/1 nicht den Reinigungsanforderungen, so kann der Ablauf 28/1 der 1. Nanofiltrationsstufe II einer Nanofiltrationsstufe III zugeführt werden.

Die Nanofiltrationsstufe III ist im gezeigten Ausführungsbeispiel funktionsgleich wie die Nanofiltrationsstufe II, wobei in der Zeichnung entsprechende Komponenten mit gleichen Bezugszeichen bezeichnet sind, die an ihrem Ende lediglich anstelle .../1 mit .../2 kenntlich gemacht sind.

Bei dem gezeigten Ausführungsbeispiel ist eine Nanofiltrationsstufe III mit einer Nanofiltrationseinrichtung 19/2 vorgesehen, die funktionsgleich wie die Nanofiltrationseinrichtung 19/1 der Nanofiltrationsstufe II ist, jedoch verfügt sie über eine noch größere Trennschärfe. So kann die Nanofiltrationseinrichtung 19/2 der Nanofiltrationsstufe III beispielsweise so beschaffen sein, daß im Abwasser enthaltenes NaCl zu 50 bis 90% zurückgehalten wird. Der Verfahrensverlauf entspricht dem aus der 1. Nanofiltrationsstufe II.

Diese Anordnung mit mehreren funktionsgleichen Einheiten im dargestellten Ausführungsbeispiel gestattet in mehrstufiger Ausführung die Hintereinanderschaltung immer schärferer Membrantrenngrenzen, bis schließlich der geforderte Rückhalt der biologisch schwer oder nicht abbaubaren Inhaltsstoffe des organisch belasteten Abwassers erreicht ist.

Die Nanofiltrationseinrichtungen 19/1 bzw. 19/2 sind für das erfindungsgemäße Verfahren so ausgebildet, daß ein nahezu vollständiger Rückhalt aller biologisch relevanten, schwer oder nicht abbaubaren Inhaltsstoffe erreicht wird, so daß mit dem behandelten Abwasser lediglich niedermolekular gelöste Inhaltsstoffe, vor allem Salze ausgetragen werden.

Wahlweise kann auch nur eine einzige Nanofiltrationsstufe II vorgesehen sein, deren Nanofiltrationseinrichtung 19/1 jedoch über die erhöhte Trennschärfe der Nanofiltrationseinrichtung 19/2 der Nanofiltrationsstufe III verfügt, was insbesondere dann von Vorteil ist, wenn das zu reinigende Abwasser zwar von allen Teilchen bis hin zu der im Zusammenhang mit der Nanofiltrationsstufe III genannten sehr kleinen Teilchengröße gereinigt werden soll, diese Teilchen (biologisch schwer oder nicht abbaubare Inhaltsstoffe) jedoch nur in einer verhältnismäßig geringen Konzentration vorliegen.

Die Konzentrate 29/1 bzw. 29/2 werden mittels Konzentratpumpen 30/1 bzw. 30/2 einem Reaktionsbehälter 31 in einer Stufe IV zur physikalischen oder chemischen Behandlung des Konzentrats zugeführt.

Die Stufe IV zur physikalischen und/oder chemischen Behandlung des Konzentrats enthält neben dem Reaktionsbehälter 31 einen durch eine Reaktionspumpe 38, eine UV-Bestrahlungseinrichtung 39 und eine Ozonbehandlungseinrichtung 40 gebildeten Reaktionskreislauf, der durch den Reaktionsbehälter 31 geschlossen wird. Weiter ist an den Reaktionsbehälter 31 eine Chemikalienpumpe 44 über eine Chemikalienleitung 45 angeschlossen, so daß aus einer Chemikalienzuführungseinrichtung 43 Flockungs- oder Fällungschemikalien oder andere Mittel zur chemischen oder physikalischen Behandlung des Konzentrats zugeführt werden können. Als solche Stoffe kommen insbesondere übliche Flockungs- und Fällungsmittel sowie Adsorptionsmittel, wie Aktivkohle, Bentonit oder ähnliches in Frage. Solche Chemikalien oder Behandlungsmittel können auch über eine Zugabeeinrichtung 34 in den Reaktionsbehälter 31 zugeführt werden. Durch die genannten Stoffe lassen sich adsorbierbare, persistente und biologisch schwer abbaubare Stoffe adsorbieren, in eine abscheidbare Form bringen und entnehmen oder so weit destruieren, daß das nun biologisch zugängliche Konzentrat 33 mit einer Beschickungspumpe 32 in den Bioreaktor 3 der biologischen Behandlungsstufe I zugegeben werden kann. Der Reaktionsbehälter 31 wird hierzu mit einem Rührwerk 35 umgewälzt und die adsorbierten oder chemisch gebundenen Inhaltsstoffe anschließend in durch Absetzen oder Filtration aufkonzentrierter Form aus dem System ausgetragen 36.

Zusätzlich zu der chemischen und/oder physikalischen Behandlung durch die bei 43 bzw. 34 zugegebenen Behandlungsmittel können oxidativ veränderbare, biologisch schwer oder nicht abbaubare Inhaltsstoffe durch Anwendung von Oxidationsmitteln entsprechend destruiert werden. Dies geschieht dadurch, daß das Konzentrat 37 über die Reaktionspumpe 38 durch die UV-Bestrahlungseinrichtung 39 und anschließend durch die Ozonbehandlungseinrichtung 40 gepumpt und dort behandelt wird. Oxidationsmittel lassen sich auch aus der Chemikalienzuführungseinrichtung 43 über die Pumpe 44 und die Leitung 45 in den Reaktionsbehälter 31 einbringen.

Alternativ kann das Verfahren auch derart ausgeführt werden, daß beim Erreichen des Aufkonzentrierungszieles in der Filtrationsvorlage 15/1 bzw. 15/2 das Konzentrat 29/1 bzw. 29/2 entweder diskontinuierlich, d. h. chargenweise, oder ein Teilstrom kontinuierlich mittels der Konzentratpumpe 30/1 bzw. 30/2 über eine Konzentratrückführleitung 45/1 bzw. 45/2 direkt der biologischen Behandlungsstufe I zugeführt wird. Im Falle teilweiser Rückführung des Konzentrats in die biologische Behandlungsstufe kann ein Teilstrom des unbehandelten Konzentrates direkt über eine Entnahmeeinrichtung 46/1 bzw. 46/2 entnommen werden.

Bei kontinuierlicher Behandlung kann das behandelte Konzentrat 33 über die Beschickungspumpe 32, nach der UV-Bestrahlungseinrichtung 39 über die Leitung 41 oder nach der Ozonbehandlungseinrichtung 40 über die Leitung 42 in den Bioreaktor 3 in der biologischen Behandlungsstufe I zurückgeführt werden. Auf diese Weise können die Behandlungsstufen I bis IV zu einem quasi-geschlossenen Kreislauf geschlossen werden, in dem eine kontinuierliche Behandlung des zu reinigenden Abwassers erfolgt, das bei 1 zugeführt wird. Die sich bei dieser kontinuierlichen Behandlung ergebenden Produkte werden in der jeweiligen Behandlungsstufe abgegeben, nämlich das überschüssige Gas und der biologische Schlamm aus der biologischen Behandlungsstufe I bei 7 bzw. 13, das gereinigte Abwasser aus den Nanofiltrationsstufen II und III bei 24/1 bzw. 24/2 und 28/2, sowie das chemisch und/oder physikalisch behandelte Konzentrat aus der Behandlungsstufe IV bei 36, wobei dies jedoch im einzelnen vom gewählten Verfahrensablauf abhängig ist.

## Patentansprüche

1. Verfahren zur Reinigung von mit biologisch schwer oder nicht abbaubaren Inhaltsstoffen organisch belastetem Abwasser, bei dem das Abwasser (1) in einer dessen biologischer Reinigung dienenden biologischen Behandlungsstufe (I) behandelt und danach in einer Nanofiltereinrichtung (19) die biologisch schwer oder nicht abbaubaren Inhaltsstoffe als Retentat (20/1) abgetrennt werden, und bei dem eine physikalische und/oder chemische Behandlung (IV) vorgesehen ist, **dadurch gekennzeichnet**, daß das Retentat (20) durch Rückführung im Kreislauf der Nanofiltereinrichtung (19) zu einem Konzentrat (29) aufkonzentriert, das Konzentrat (29) der physikalischen und/oder chemischen Behandlung (IV) unterzogen und das behandelte Konzentrat (33) mindestens teilweise zu der biologischen Behandlungsstufe (I) zurückgeführt wird.

2. Verfahren nach Anspruch 1, **dadurch gekennzeichnet**, daß in der biologischen Behandlungsstufe (I) eine mikrobielle Umsetzung unter Überdruck ausgeführt und das behandelte Abwasser durch Membran- oder Ultrafiltration (9) vom biologischen Schlamm (10) getrennt wird.

3. Verfahren nach Anspruch 1 oder 2, **dadurch gekennzeichnet**, daß ein Teil (46) des Konzentrates (29) ausgetragen wird.

4. Verfahren nach einem der Ansprüche 1 bis 3, **dadurch gekennzeichnet**, daß ein Teil des der physikalischen und/oder chemischen Behandlung unterzogenen Konzentrats (33) ausgetragen wird.

5. Verfahren nach einem der Ansprüche 1 bis 4, **dadurch gekennzeichnet**, daß in der Nanofiltereinrichtung (19) im Abwasser (1) gelöstes NaCl zu 30 bis 70 % zurückgehalten wird.

6. Verfahren nach einem der Ansprüche 1 bis 4, **dadurch gekennzeichnet**, daß in der Nanofiltereinrichtung (19) im Abwasser (1) gelöstes NaCl zu 50 bis 90 % zurückgehalten wird.

7. Verfahren nach einem der Ansprüche 1 bis 4, **dadurch gekennzeichnet**, daß in der Nanofiltereinrichtung (19) im Abwasser (1) gelöstes NaCl zu 10 bis 30 % zurückgehalten wird.

8. Verfahren nach einem der Ansprüche 1 bis 7, **dadurch gekennzeichnet**, daß das Konzentrat (29/2) in mehreren hintereinandergeschalteten Nanofiltereinrichtungen (19/1, 19/2) gewonnen wird.

9. Verfahren nach einem der Ansprüche 1 bis 8, **dadurch gekennzeichnet**, daß die Einstellung des Konzentrationsgrades des Konzentrats (29/1) in einem kontinuierlichen Prozeß durchgeführt und das bei der Nanofiltration (19/1) anfallende Permeat (21/1) im Falle eines noch nicht ausreichenden Reinigungsgrades einer weiteren Behandlungsstufe (III) mit weitergehender Trennschärfe zugeführt wird, bis das Reinigungsziel erreicht ist und das Permeat (21/2) als gereinigtes Abwasser (24/2) abgeleitet werden kann.

10. Verfahren nach einem der Ansprüche 1 bis 9, **dadurch gekennzeichnet**, daß das Konzentrat (29) mit UV-Strahlung (39) und/oder einem chemischen Oxidationsmittel behandelt wird.

11. Verfahren nach einem der Ansprüche 1 bis 10, dadurch gekennzeichnet, daß das Konzentrat (29) mit einem Adsorptionsmittel sowie mit einem Flockungs- und/oder Fällungsmittel behandelt wird.

12. Verfahren nach einem der Ansprüche 1 bis 11, **dadurch gekennzeichnet**, daß die Nanofiltereinrichtung (19) zum Zwecke der Regenerierung in Intervallen gespült (27) wird.

13. Verfahren nach einem der Ansprüche 1 bis 12, **dadurch gekennzeichnet**, daß die Aufkonzentrierung und die physikalische und/oder chemische Behandlung (IV) des Konzentrats (29) diskontinuierlich erfolgt.

14. Verfahren nach einem der Ansprüche 1 bis 12, **dadurch gekennzeichnet**, daß die Aufkonzentrierung und die physikalische/chemische Behandlung (IV) eines Teilstromes des Konzentrats kontinuierlich erfolgt.

15. Verfahren nach einem der Ansprüche 1 bis 14, **dadurch gekennzeichnet**, daß die Verweilzeiten von Wasser, biologisch leicht abbaubaren Substanzen, biologisch schwer abbaubaren Substanzen und biologisch nicht abbaubaren Substanzen in einem aus biologischer Behandlungsstufe (I), Nanofiltereinrichtung (19) und physikalisch/chemischer Behandlung (IV) gebildeten Wasserkreislauf durch den unterschiedlichen Rückhalt dieser Substanzen in der Nanofiltereinrichtung (19) voneinander unabhängig eingestellt werden.

16. Verfahren nach einem der Ansprüche 1 bis 15, **dadurch gekennzeichnet**, daß die Konzentrationserhöhungen von biologisch leicht und schwer abbaubaren Substanzen in einem aus biologischer Behandlungsstufe (I), Nanofiltereinrichtung (19) und physikalisch/chemischer Behandlung (IV) gebildeten Wasserkreislauf durch den unterschiedlichen Rückhalt in der Nanofiltereinrichtung (19) voneinander unabhängig eingestellt werden.

17. Verfahren nach einem der Ansprüche 1 bis 16, **dadurch gekennzeichnet**, daß in einem aus biologischer Behandlungsstufe (I), Nanofiltereinrichtung (19) und physikalisch/chemischer Behandlung (IV) gebildeten Wasserkreislauf die Restgehalte an Inhaltsstoffen mittels der Nanofiltereinrichtung (19) gesteuert werden.

18. Verfahren nach Anspruch 16 oder 17, **dadurch gekennzeichnet**, daß in einem aus biologischer Behandlungsstufe (I), Nanofiltereinrichtung (19) und physikalisch/chemischer Behandlung (IV) gebildeten Wasserkreislauf die Elimination der Inhaltsstoffe mittels der biologischen Umsetzung und der physikalisch/chemischen Behandlung gesteuert wird.

19. Verfahren nach einem der Ansprüche 1 bis 18, **dadurch gekennzeichnet**, daß die Aufbereitung zu biologisch umsetzbaren Stoffen durch die physikalische und/oder chemische Behandlung (IV) nur so weit betrieben wird, daß sich in dem Wasserkreislauf keine störend hohen Stoffkonzentrationen aufbauen.

20. Vorrichtung zur Reinigung von mit biologisch schwer oder nicht abbaubaren Inhaltsstoffen organisch belastetem Abwasser, mit einer dessen biologischer Reinigung dienenden biologischen Behandlungsstufe (I), der eingangsseitig das Abwasser (1) zugeführt wird, einer Nanofiltereinrichtung (19), der eingangsseitig das in der biologischen Behandlungsstufe (I) behandelte Abwasser (11) zugeführt wird und in der ausgangsseitig einerseits die biologisch schwer oder nicht abbaubaren Inhaltsstoffe als Retentat (20) und andererseits das gereinigte Abwasser (24) als Permeat (21) anfallen, und mit einer Einrichtung (IV) zur physikalischen und/oder chemischen Behandlung, **dadurch gekennzeichnet**, daß die zur physikalischen und/oder chemischen Behandlung dienende Einrichtung (IV) mit ihrer Ausgangsseite an die biologische Behandlungsstufe (I) und mit ihrer Eingangsseite an einen zur Aufkonzentrierung des Retentats (20) dienenden Filtrationsvorlagebehälter (15) angeschlossen ist, der zwischen die Eingangsseite und die das Retentat (20) liefernde Ausgangsseite der Nanofiltereinrichtung (19) im Kreislauf geschaltet ist.

21. Vorrichtung nach Anspruch 20, **dadurch gekennzeichnet**, daß die biologische Behandlungsstufe (I) einen der mikrobiellen Umsetzung biologisch abbaubarer organischer Inhaltsstoffe des Abwassers dienenden, druckbeaufschlagten Bioreaktor (3) aufweist, dem eingangsseitig das sowohl die biologisch abbaubaren als auch die biologisch schwer oder nicht abbaubaren Inhaltsstoffe enthaltende Abwasser (1) zugeführt wird, sowie eine an den Bioreaktor (3) angeschlossene, den im Bioreaktor (3) entstehenden biologischen Schlamm (10, 12) zurückhaltende Membran- oder Ultrafiltrationseinrichtung (9), von der ausgangsseitig das vom biologischen Schlamm befreite Abwasser (11) abgeleitet und dem Filtrationsvorlagebehälter (15) zugeführt wird.

22. Vorrichtung nach Anspruch 20 oder 21, **dadurch gekennzeichnet**, daß zur kontinuierlichen Überwachung der Konzentratbeschaffenheit eine Leitfähigkeitsbestimmungs-, Trübungsmessungs- oder kontinuierlich zu betreibende Analysatorvorrichtung vorgesehen ist.

23. Vorrichtung nach einem der Ansprüche 20 bis 22, **dadurch gekennzeichnet**, daß die Einrichtung zur physikalischen und/oder chemischen Abwasserbehandlung (IV) eine Einrichtung zur naßchemischen Oxidation, wie eine Kombination einer UV-Belichtungseinrichtung (39) und einer ein Oxidationsmittel, wie Ozon oder H₂O₂, abgebenden Einrichtung (40), aufweist.

24. Vorrichtung nach einem der Ansprüche 20 bis 23, **dadurch gekennzeichnet**, daß die Einrichtung zur physikalischen und/oder chemischen Abwasserbehandlung (IV) einen Reaktionsbehälter (31) aufweist, in dem persistente Inhaltsstoffe, wie Schwermetalle, adsorptiv, zum Beispiel mit Aktivkohle, Bentonit oder mit einem Flockungs- und/oder Fällungsmittel, eine weitere Aufkonzentrierung erfahren und aus der Einrichtung zur chemischen und/oder physikalischen Abwasserbehandlung (IV) entfernt werden und in den das aufkonzentrierte Retentat (29) gepumpt wird.

25. Vorrichtung nach Anspruch 23, **dadurch gekennzeichnet**, daß der Einrichtung zur naßchemischen Oxidation (39, 40) ein Teilstrom des aufkonzentrierten Retentats (29) zugeführt und dieser dort kontinuierlich behandelt wird.

26. Vorrichtung nach einem der Ansprüche 20 bis 25, **dadurch gekennzeichnet**, daß mehrere Nanofiltereinrichtungen (19/1, 19/2) in stufenförmiger Hintereinanderschaltung vorgesehen sind.

## Claims

1. Process for purifying waste water which is organically polluted with poorly biodegradable or non-biodegradable constituents, in which the waste water (1) is treated in a biological treatment stage (I) serving for the biological purification of the waste water, and the poorly biodegradable or non-biodegradable constituents are then separated off as a retentate (20/1) in a nanofiltration apparatus (19), and in which a physical and/or chemical treatment (IV) is provided, characterized in that the retentate (20) is concentrated to form a concentrate (29) by recirculation in the nanofiltration apparatus (19) cycle, the concentrate (29) is subjected to the physical and/or chemical treatment (IV) and the treated concentrate (33) is recirculated at least in part to the biological treatment stage (I).

2. Process according to Claim 1, characterized in that a microbial reaction is carried out under super-atmospheric pressure in the biological treatment stage (I) and the treated waste water is separated from the biological sludge (10) by membrane filtration or ultrafiltration (9).

3. Process according to Claim 1 or 2, characterized in that some (46) of the concentrate (29) is discharged.

4. Process according to one of Claims 1 to 3, characterized in that some of the concentrate (33) subjected to the physical and/or chemical treatment is discharged.

5. Process according to one of Claims 1 to 4, characterized in that 30 to 70% of the NaCl dissolved in the waste water (1) is retained in the nanofiltration apparatus (19).

6. Process according to one of Claims 1 to 4, characterized in that 50 to 90% of the NaCl dissolved in the waste water (1) is retained in the nanofiltration apparatus (19).

7. Process according to one of Claims 1 to 4, characterized in that 10 to 30% of the NaCl dissolved in the waste water (1) is retained in the nanofiltration apparatus (19).

8. Process according to one of Claims 1 to 7, characterized in that the concentrate (29/2) is produced in a plurality of nanofiltration apparatuses (19/1, 19/2) which are connected in series.

9. Process according to one of Claims 1 to 8, characterized in that the degree of concentration of the concentrate (29/1) is set in a continuous process and the permeate (21/1) produced in the nanofiltration (19/1) is, in the case of an insufficient degree of purification, fed to a further treatment stage (III) having greater selectivity, until the purification goal is achieved and the permeate (21/2) can be discharged as purified waste water (24/2).

10. Process according to one of Claims 1 to 9, characterized in that the concentrate (29) is treated with UV radiation (39) and/or a chemical oxidizing agent.

11. Process according to one of Claims 1 to 10, characterized in that the concentrate (29) is treated with an absorbent and with a flocculant and/or precipitant.

12. Process according to one of Claims 1 to 11, characterized in that the nanofiltration apparatus (19) is flushed (27) at intervals for the purpose of regeneration.

13. Process according to one of Claims 1 to 12, characterized in that the concentration and physical and/or chemical treatment (IV) of the concentrate (29) is performed batchwise.

14. Process according to one of Claims 1 to 12, characterized in that the concentration and physical/chemical treatment (IV) of a part-stream of the concentrate is performed continuously.

15. Process according to one of Claims 1 to 14, characterized in that the residence times of water, readily biodegradable substances, poorly biodegradable substances and non-biodegradable substances are set independently of one another in a water cycle formed by biological treatment stage (I), nanofiltration apparatus (19) and physical-chemical treatment (IV) by the differing retention of these substances in the nanofiltration apparatus (19).

16. Process according to one of Claims 1 to 15, characterized in that the increases in concentration of readily biodegradable and poorly biodegradable substances are set independently of one another in a water cycle formed from biological treatment stage (I), nanofiltration apparatus (19) and physical-chemical treatment (IV) by the differing retention in the nanofiltration apparatus (19).

17. Process according to one of Claims 1 to 16, characterized in that, in a water cycle formed from biological treatment stage (I), nanofiltration apparatus (19) and physical/chemical treatment (IV), the residual contents of constituents are controlled by means of the nanofiltration apparatus (19).

18. Process according to Claim 16 or 17, characterized in that, in a water cycle formed from biological treatment stage (I), nanofiltration apparatus (19) and physical/chemical treatment (IV), the elimination of the constituents is controlled by means of the biological reaction and the physical/chemical treatment.

19. Process according to one of Claims 1 to 18, characterized in that the processing to give bioreactive substances by means of the physical and/or chemical treatment (IV) is operated only to the extent that concentrations high enough to interfere do not build up in the water cycle.

20. Device for purifying waste water which is organically polluted by poorly biodegradable or non-biodegradable constituents, having a biological treatment stage (I) serving for biological purification of the waste water, to which biological treatment stage the waste water (1) is fed on the inlet side, a nanofiltration apparatus (19) to which the waste water (11) treated in the biological treatment stage (I) is fed on the inlet side and in which, on the outlet side, firstly the poorly biodegradable or non-biodegradable constituents are produced as retentate (20) and secondly the purified waste water (24) is produced as permeate (21) and having an apparatus (IV) for physical and/or chemical treatment, characterized in that the apparatus (IV) serving for the physical and/or chemical treatment is connected by its outlet side to the biological treatment stage (I) and by its inlet side to a filtration reservoir (15) serving to concentrate the retentate (20), which filtration reservoir is connected in the cycle between the nanofiltration apparatus (19) inlet side and the outlet side delivering the retentate (20).

21. Device according to Claim 20, characterized in that the biological treatment stage (I) has a pressurized bioreactor (3) which serves for the microbial conversion of biodegradable organic constituents of the waste water, to which bioreactor is fed, on the inlet side, the waste water (1) which contains both the biodegradable and the poorly biodegradable or non-biodegradable constituents, and a membrane apparatus or ultrafiltration apparatus (9) which is connected to the bioreactor (3) and retains the biological sludge (10, 12) formed in the bioreactor (3), from which membrane filtration or ultrafiltration apparatus the waste water (11) which has been freed from the biological sludge is discharged on the outlet side and is fed to the filtration reservoir (15).

22. Device according to Claim 20 or 21, characterized in that, for continuous monitoring of the concentrate properties, a device for determining conductivity, a device for measuring turbidity or analytical device to be operated continuously is provided.

23. Device according to one of Claims 20 to 22, characterized in that the apparatus for the physical and/or chemical waste water treatment (IV) is equipped with an apparatus for wet-chemical oxidation, such as a combination of a UV illumination apparatus (39) and an apparatus (40) releasing an oxidizing agent, such as ozone or H₂O₂.

24. Device according to one of Claims 20 to 23, characterized in that the apparatus for the physical and/or chemical waste water treatment (IV) has a reaction vessel (31) in which persistent constituents, such as heavy metals, are removed by adsorption, for example to activated carbon, bentonite or to a flocculant and/or precipitant, experience further concentration and are removed from the apparatus for the chemical and/or physical waste water treatment (IV) and are pumped into the concentrated retentate (29).

25. Device according to Claim 23, characterized in that a part-stream of the concentrated retentate (29) is fed to the apparatus for the wet-chemical oxidation (39, 40) and this part-stream is continuously treated there.

26. Device according to one of Claims 20 to 25, characterized in that a plurality of nanofiltration apparatuses (19/1, 19/2) are provided connected in series in stages.

## Revendications

1. Procédé pour l'épuration d'eaux usées chargées organiquement de matières contenues difficiles ou impossibles à détruire par voie biologique où les eaux usées (1) sont traitées dans un étage de traitement biologique servant à leur épuration biologique (I) et ensuite dans une installation de nanofiltration (19), les matières difficiles ou impossibles à détruire par voie biologique sont séparées en tant que rétentat (20/1) et où un traitement physique et/ou chimique (IV) est prévu, caractérisé en ce que le rétentat (20) est concentré, par retour dans le circuit du dispositif de nanofiltration (19), en un concentré (29), le concentré (29) est soumis au traitement physique et/ou chimique et le concentré traité (33) est ramené au moins partiellement à travers l'étape de traitement biologique (I).

2. Procédé selon la revendication 1, caractérisé en ce que dans l'étage de traitement biologique (I), une transformation microbienne avec excès de pression est réalisée et les eaux usées traitées sont séparées par filtration sur membrane ou ultrafiltration (9), de la boue biologique (10).

3. Procédé selon la revendication 1 ou 2, caractérisé en ce qu'une partie (46) du concentré (29) est évacuée.

4. Procédé selon l'une des revendications 1 à 3, caractérisé en ce qu'une partie du concentré (33) soumis au traitement physique et/ou chimique est évacuée.

5. Procédé selon l'une des revendications 1 à 4, caractérisé en ce que dans le dispositif de nanofiltration (19), NaCl dissous dans les eaux usées est retenu à 30 à 70%.

6. Procédé selon l'une des revendications 1 à 4, caractérisé en ce que dans le dispositif de nanofiltration (19), NaCl dissous dans les eaux usées (1) est retenu à 50 à 90%.

7. Procédé selon l'une des revendications 1 à 4, caractérisé en ce que dans le dispositif de nanofiltration (19) NaCl dissous dans les eaux usées (1) est retenu à 10 à 30%.

8. Procédé selon l'une des revendications 1 à 7, caractérisé en ce que le concentré (29/2) est récupéré dans plusieurs dispositifs de nanofiltration placés les uns derrière les autres (19/1, 19/2).

9. Procédé selon l'une des revendications 1 à 8, caractérisé en ce que l'ajustement du degré de concentration du concentré (29/1) est accompli dans un processus continu et en ce que dans le perméat (21/1) résultant de la nanofiltration (19/1), dans le cas d'un degré non encore suffisant d'épuration, un autre étage de traitement (III) avec une plus importante force de séparation est prévu, jusqu'à ce que le but de l'épuration soit atteint et que le perméat (21/2) puisse être évacué en tant qu'eaux usées épurées (24/2).

10. Procédé selon l'une des revendications 1 à 9, caractérisé en ce que le concentré (29) est traité au moyen de rayons UV (39) et/ou d'un agent chimique d'oxydation.

11. Procédé selon l'une des revendications 1 à 10, caractérisé en ce que le concentré (29) est traité avec un agent d'adsorption ainsi qu'avec un agent de floculation et/ou de décantation.

12. Procédé selon l'une des revendications 1 à 11, caractérisé en ce que le dispositif de nanofiltration (19) est rincé (27) en vue d'une régénération, à certains intervalles.

13. Procédé selon l'une des revendications 1 à 12, caractérisé en ce que la concentration et le traitement physique et/ou chimique (IV) du concentré (29) sont discontinus.

14. Procédé selon l'une des revendications 1 à 12, caractérisé en ce que la concentration et le traitement physique/chimique (IV) d'un courant partiel du concentré se produit continuellement.

15. Procédé selon l'une des revendications 1 à 14, caractérisé en ce que les temps de résidence de l'eau, des substances faciles à détruire par voie biologique, des substances difficiles à détruire par voie biologique et des substances impossibles à détruire par voie biologique sont ajustés dans un circuit d'eau formé de l'étage de traitement biologique (I), du dispositif de nanofiltration (19) et du traitement physique/chimique (IV) par une retenue différente de ces substances dans le dispositif de nanofiltration, indépendamment les unes des autres.

16. Procédé selon l'une des revendications 1 à 15, caractérisé en ce que les augmentations de concentration des substances faciles et difficiles à détruire par voie biologique, dans un circuit d'eau formé d'un étage de traitement biologique (I), d'un dispositif de nanofiltration (19) et d'un traitement physique/chimique (IV) sont ajustées par une retenue différente dans le dispositif de nanofiltration (19), indépendamment les unes des autres.

17. Procédé selon l'une des revendications 1 à 16, caractérisé en ce que, dans un circuit d'eau formé de l'étage de traitement biologique (I), du dispositif de nanofiltration (19) et du traitement physique/chimique (IV), la teneur résiduelle en matières contenues est ajustée au moyen du dispositif de nanofiltration (19).

18. Procédé selon l'une des revendications 16 ou 17, caractérisé en ce que dans un circuit d'eau formé d'un étage de traitement biologique (I), d'un dispositif de nanofiltration (19) et d'un traitement physique/chimique (IV), l'élimination des matières contenues est ajustée au moyen de la transformation biologique et du traitement physique/chimique.

19. Procédé selon l'une des revendications 1 à 18, caractérisé en ce que la préparation en matières biologiquement transformables par le traitement physique et/ou chimique (IV) n'est effectuée que jusqu'au point que, dans le circuit d'eau, ne s'accumulent pas de concentrations élevées perturbatrices de matières.

20. Dispositif pour l'épuration d'eaux usées chargées organiquement de matières contenues difficiles ou impossibles à détruire par voie biologique avec un étage de traitement biologique (I) servant à leur épuration biologique, qui reçoit côté entrée les eaux usées (1), un dispositif de nanofiltration (19), auquel sont conduites côté entrée, les eaux usées (11) traitées dans l'étage de traitement biologique et où précipitent, côté sortie, d'une part, les matières difficiles ou impossibles à détruire par voie biologique en tant que rétentat (20) et d'autre part les eaux usées épurées (IV) en tant que perméat, et avec un dispositif (IV) pour le traitement physique et/ou chimique, caractérisé en ce que le dispositif servant au traitement physique et/ou chimique (IV) est raccordé par son côté sortie à l'étage de traitement biologique (I) et par son côté entrée à un récipient collecteur de filtration (15) servant à la concentration du rétentat (20), qui est en circuit entre le côté entrée et le côté sortie délivrant le rétentat (20) du dispositif de nanofiltration (19).

21. Dispositif selon la revendication 20, caractérisé en ce que l'étage de traitement biologique (I) Présente un bioréacteur (3) sollicité par la pression, servant à la transformation microbienne des matières organiques contenues pouvant être détruites par voie biologique, dans les eaux usées auquel sont conduites côté entrée aussi bien les matières pouvant être détruites par voie biologique qu'également les matières difficiles ou impossibles à détruire par voie biologique ainsi qu'un dispositif de filtration à membrane ou d'ultrafiltration raccordé au bioréacteur (3), retenant la boue (10, 12) biologique obtenue dans le bioréacteur (3), du côté sortie duquel sont dérivées les eaux usées (11) libérées des boues biologiques et qui sont conduites au récipient collecteur de filtration (15).

22. Dispositif selon la revendication 20 ou 21, caractérisé en ce que pour la surveillance continue de la disponibilité du concentré, on prévoit un dispositif déterminant la conductivité, de mesure du trouble ou bien d'analyse fonctionnant continuellement.

23. Dispositif selon l'une des revendications 20 à 22, caractérisé en ce que le dispositif pour le traitement physique et/ou chimique des eaux usées (IV) présente un dispositif pour l'oxydation chimique en phase humide comme une combinaison d'un système d'éclairement aux UV (39) et d'un système (40), émettant un agent d'oxydation tel que de l'ozone ou H₂O₂.

24. Dispositif selon l'une des revendications 20 à 23, caractérisé en ce que le dispositif pour le traitement physique et/ou chimique des eaux usées (IV) présente un récipient réactionnel (31) dans lequel les matières contenues persistantes, comme les métaux lourds, subissent une plus ample concentration par adsorption, par exemple avec du charbon activé, de la bentonite ou avec un agent de floculation et/ou de précipitation et sont retirées du dispositif pour le traitement chimique et/ou physique des eaux usées et où le rétentat concentré (29) est pompé.

25. Dispositif selon la revendication 23, caractérisé en ce que le dispositif pour l'oxydation en phase humide (39, 40) reçoit un courant partiel du rétentat concentré (29) et celui-ci y est traité continuellement.

26. Dispositif selon l'une des revendications 20 à 25, caractérisé en ce que plusieurs dispositifs de nanofiltration (19/1, 19/2) sont prévus les uns derrière les autres en étages.
